# EUROPEAN PATENT SPECIFICATION

(11) **EP 0 981 438 B1**
(45) Date of publication and mention of the grant of the patent: **28.07.2004**
(21) Application number: 98923256.6
(22) Date of filing: 12.05.1998
(51) Int. Cl.: B32B 27/10, B32B 27/16, B32B 27/32, C08J 7/06, B65B 55/10, B41M 1/30

(54) **PRINTING INK-DECORATED PACKAGING MATERIAL, IN PARTICULAR FOR ASEPTIC PACKAGES**
MIT DRUCKTINTE DEKORIERTES VERPACKUNGSMATERIAL INSBESONDERE FÜR ASEPTISCHE PACKUNGEN
MATERIAU D'EMBALLAGE DECORE A L'ENCRE D'IMPRIMERIE ET DESTINE NOTAMMENT AUX EMBALLAGES ASEPTIQUES

(30) Priority: 14.05.1997 SE 9701786
(43) Date of publication of application: 01.03.2000
(73) Proprietor: Tetra Laval Holdings & Finance S.A., 1009 Pully (CH)
(72) Inventor: LASSON, Rolf, S-226 55 Lund (SE); KARLSSON, Christer, S-237 32 Bjärred (SE); JOHANSSON, Kaj, S-260 24 Röstanga (SE); PUSZTAI, Zoltan, S-245 42 Staffanstorp (SE)
(74) Representative: Sundell, Hakan
(86) International application number: PCT/SE1998/000868
(87) International publication number: WO 1998/051491

(56) References cited:
- WO-A-94/01143
- WO-A-94/14606

## Description

### TECHNICAL FIELD

The present invention relates to a printing ink-decorated packaging material of laminate type comprising an outer coating of plastic which has décor of water-based printing ink applied on the outside of the coating. In particular, the present invention relates to such a printing ink-decorated packaging material for aseptic packages of the type which is produced from a web of the packaging material which, for purposes of sterilization, is led through a bath of hydrogen peroxide before reforming of the web into finished, aseptic packages. In addition, the present invention relates to an aseptic package produced from the printing ink-decorated packaging material according to the invention.

### BACKGROUND ART

Conventional, dimensionally stable packages of the single-use disposable type for liquid foods are typically produced from a packaging material of the laminate type comprising a rigid, but foldable core layer of paper and outer, liquid-tight coatings of plastic. The material in the two outer plastic coatings normally consists of polyethylene, preferably low density polyethylene (LDPE), which in addition to displaying superior tightness properties vis-à-vis liquids, is also thermosealable whereby the packaging material may readily be reformed into dimensionally stable single-use disposable packages employing simple, efficient thermosealing in a per se known manner.

In certain cases, in particular when the packaging material is to be employed for aseptic packages to pack liquid foods of extended shelf life, the prior art packaging material is often provided with at least one additional so-called barrier layer in order to impart to the aseptic packages further barrier properties, such as tightness properties against oxygen gas. One example of such a barrier material which is often employed in connection with aseptic packages is a thin aluminium foil (so-called Alifoil) which is applied between the core layer and that plastic coating which is to be turned to face inwards when the packaging material is reformed into packages.

Conventionally, the known packaging material is produced by a simple extrusion process, which is based on the concept that a web of paper is coated with polyethylene which is extruded on both sides of the web for the formation of outer, liquid-tight plastic coatings. The web is thereafter led through a printing station which includes printing rollers by means of which printing ink is applied on the web in any optional pattern for the formation of the desired printing ink décor on the one outer plastic coating of the web.

In that case when the packaging material is to be employed for aseptic packages, the plastic-coated but as yet unprinted web is led to a lamination station in which polyethylene-coated aluminium foil is applied on and - using suitable binder (adhesive) - is permanently united with one side of the web. The thus alifoiled web is thereafter provided with the desired décor of water-based printing ink which is applied on the outer plastic coating on that side of the web which is not clad with Alifoil, in the same manner as described above.

Dimensionally stable packages of the single-use disposable type are nowadays often produced using modern, high-speed packing and filling machines of the type which, either from a web or from prefabricated sheet blanks of the printing ink-decorated material, form, fill and seal the packages. From, for example, a web, the packages are produced in that the web is first reformed into a tube by both longitudinal edges of the web being joined to one another in an overlap joint seal. The tube is filled with the pertinent contents, for example liquid food, and is then divided into individual, filled packages by repeated transverse thermoseals of the tube, transversely of the longitudinal axis of the tube. The packages are separated from one another by incisions or cuts in the transverse sealing zones and are then given the desired geometric, normally parallelepipedic, configuration by an additional forming and thermosealing operation for the formation of the finished, printing ink-decorated packages.

Aseptic packages are produced in the same manner as above, but with the sole crucial difference that both the packaging material and the pertinent contents are sterilized before the filling process, and that the filling process takes place under sterile (aseptic) conditions in order to avoid reinfection.

Sterilization of the packaging material normally takes place with the aid of a chemical sterilizing agent, preferably hydrogen peroxide, which is bought into contact with at least that part of the packaging material which comes into contact with the sterilized contents during the filling phase.

In many cases however, the entire packaging material is sterilized, which often takes place in that the planar packaging material web, prior to the filling phase, is led down into and through a bath of aqueous hydrogen peroxide which, during a certain length of time, is allowed to act on the web for the destruction of unwanted, in particular pathogenic, micro-organisms.

Printing inks for the described application in connection with packaging materials are now often water-based, which requires that the surface which is to be printed (in the present case a surface of LDPE) either in itself must be, or otherwise be rendered sufficiently hydrophilic to be able to absorb and permanently retain the applied printing ink. LDPE is inherently water-repellent (i.e. hydrophobic), but, by a simple surface treatment which changes its polarity, can be rendered hydrophilic to the desired extent in order to absorb and retain, with good adhesion, water-based printing inks. Therefore, the known LDPE-coated packaging material as disclosed above has, prior to the application of the printing ink, been treated by means of corona technique for the purposes of promoting adhesion, this technique being an effective method for realising the change in polarity which is necessary to render the LDPE printing surface hydrophilic to the desired degree.

Even though it has thus been possible to produce printing ink-decorated packaging materials with good adhesion between the applied water-based printing ink and the outer plastic coating of the packaging material despite the fact that the plastic in itself is hydrophobic, it has proved according to the present invention that a packaging material of the known, prior art type can, with surprisingly simple means, be improved and rendered particularly advantageous for aseptic packages which are produced by sterilization using aqueous hydrogen peroxide in the above-described manner.

### OBJECT OF THE INVENTION

One object of the present invention is, thus, to realise such an improved packaging material, in particular for aseptic packages.

### SOLUTION

This and other objects and advantages will be attained according to the present invention through the packaging material as defined in independent Claim 1 . Expedient embodiments of the packaging material according to the present invention have further been given the characterizing features as set forth in the appended subclaims.

### OUTLINE OF THE INVENTION

The printing ink-decorated packaging material according to the invention, which has an outer coating of high density polyethylene (HDPE) as carrier of the décor of water-based printing ink applied on the outside of the coating has proved to withstand better the external action of moisture than the prior art packaging material which employs an outer décor-carrying coating of low density polyethylene (LDPE). In particular, it has proved that packages made from the packaging material according to the invention, even after a very long storage time in a damp environment, retain their outer printing ink décor practically intact, while a corresponding printing ink décor on prior art packages has a tendency to lose both clarity and freshness with the passage of time under identical storage conditions.

It has also proved that not only does the printing ink décor on a packaging material according to the present invention exposed to aqueous hydrogen peroxide as in the production of aseptic packages better withstand attack from the aggressive sterilizing agent than corresponding printing ink décor on the prior art packaging material, but also the packaging material according to the present invention is susceptible to sterilization with considerably lower consumption of hydrogen peroxide than the prior art packaging material.

The explanation for the excellent results achieved according to the present invention is related to the surface treatment (i.e. corona treatment) for the purpose of changing polarity which both the prior art packaging material and the packaging material according to the present invention undergo to achieve good adhesion between the water-based printing ink and each respective hydrophobic plastic coating.

A corona treatment which is carried out on an LDPE coating is sufficiently powerful to achieve the desired change in polarity, but at the same time is also so powerful that the LDPE coating is "broken up" when it is hit by the electric corona discharges. Since such "broken up" areas wholly or partly lack hydrophilic seats, the water-based printing ink will adhere to the LDPE coating with reduced adhesion, whereby the risk of interaction between the applied printing ink and moisture which the packaging material may come into contact with thus increases. Apart from the fact that the printing ink comes into contact and interacts with the water in the bath, hydrogen peroxide will also be attracted and absorbed by hydrophilic seats on the polyethylene coating in broken up regions outside the applied printing ink décor, with excessive hydrogen peroxide consumption as a result.

The problem of printing ink/ moisture interaction and consequential deterioration in décor is naturally further aggravated when a web of the packaging material is led through a bath of aqueous hydrogen peroxide, as in the production of aseptic packages, at the same time as regions of the web which are "broken up" but not coated with printing ink show a tendency to attract hydrogen peroxide because of their hydrophilic nature, whereby consumption of hydrogen peroxide is thus unnecessarily increased.

Granted, an outer plastic coating of HDPE, as in the packaging material according to the present invention is also hydrophobic in its nature and must therefore, like LDPE, be subjected to a surface treatment to change polarity prior to the application of water-based printing ink, but, unlike LDPE, HDPE has surprisingly proved able to withstand such surface treatment without being "broken up", even if the surface treatment is carried out using corona discharges. A corona treatment of the outer HDPE coating, prior to the application of printing ink on the outside of the HDPE coating thus changes the polarity (hydrophilic) of the HDPE coating sufficiently for it to be possible to apply the water-based printing ink with good adhesion, at the same time as regions of the corona-treated HDPE surface not coated with printing ink remain hydrophobic and water-repellent. A printing ink-decorated web of the packaging material according to the present invention has therefore better potential to withstand attack by moisture of the type printing ink/moisture interaction and may be led through a bath of hydrogen peroxide without excessively attracting and absorbing the hydrogen peroxide.

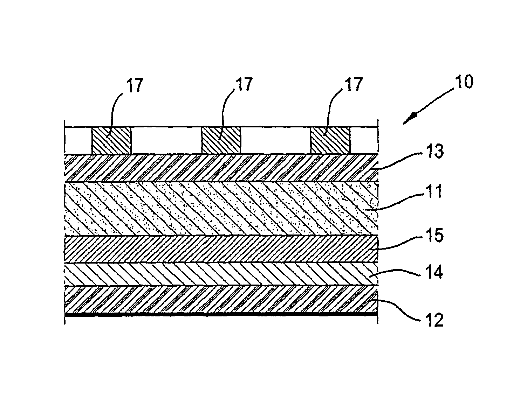

### BRIEF DESCRIPTION OF THE ACCOMPANYING DRAWING

The present invention will now be described in greater detail hereinbelow, with reference to the accompanying Drawing which schematically illustrates a cross section through a packaging material according to the present invention for aseptic packages.

### DESCRIPTION OF PREFERRED EMBODIMENT

On the Drawing, the packaging material according to the invention has been given the generic reference numeral 10. The packaging material 10 has a core layer 11 of rigid, but foldable paper of conventional packaging quality, and outer, liquid-tight coatings 12 and 13 of plastic on both sides of the core layer 11. Between one of the two outer plastic coatings 12 and the core layer 11, there is disposed a foil 14 serving as a gas barrier and which, by means of a layer 15 of an adhesive, is bonded to the core layer 11. The side of the Alifoil 14 facing away from the core layer 11 is thus covered by the above-mentioned one of the two outer plastic coatings 12.

In order to increase the adhesion between the Alifoil 14 and this outer plastic coating, a layer of adhesive of the same type as the adhesive in the layer 15 may be provided between this outer plastic coating 12 and the Alifoil 14.

The material in the outer plastic coating 12 may be any suitable material whatever. Preferably, the material consists of a thermoplastic which, on the one hand imparts to the packaging material tightness properties against liquids for protecting the inner, moisture-sensitive paper layer 11, and, on the other hand, makes possible package production by thermosealing. Examples of such thermoplastics as are often employed in packaging materials of the type under consideration here are polyolefins, such as polyethylene or polypropylene. One particularly preferred material is, however, low density polyethylene (LDPE) which has both of the desired properties in respect of liquid tightness and thermosealing, but which moreover is economical, readily available and possesses superior processing properties. Other materials which may be employed according to the invention are barrier polymers such as polyester, polyamide and ethyl vinyl alcohol copolymers (EVOH). The choice of material in the outer plastic coating 12 is, however, not critical to the present invention, nor does it constitute a germane part of the invention as such.

On the other hand, the material in the other of the two outer plastic coatings of the packaging material 10, i.e. the outer plastic coating 13 on the other side of the core layer 11 is a high density polyethylene (HDPE) according to the invention. An HDPE coating is not only liquid-tight for protecting the inner core paper layer 11 but can also, as has been described above, be treated for changing polarity by a corona treatment without being destroyed or "broken up" because of corona discharges as is the case in an LDPE coating. Moreover, an HDPE coating is thermosealable, with an outer plastic coating 12 of LDPE on the other side of the core layer 11.

As is apparent from the Drawing, the packaging material 10 has further, on the outside of the HDPE coating 13, décor 17 of water-based printing ink as has been described previously.

The packaging material 10 may be produced in a conventional manner in that a web of rigid, but foldable paper is coated on both sides with plastic, preferably LDPE, whereafter the one side of the plastic coated web is permanently united with an Alifoil 14 by a conventional lamination operation. The web is thereafter coated with an outer coating 12 of thermoplastic, preferably LDPE which is extruded on one side of the web, at the same time as the other side of the web is coated with an outer coating 13 of HDPE. The two outer coatings 12 and 13 may be extruded separately, but are preferably extruded simultaneously by a co-extrusion process. Thereafter, the web is led through a printing station in which the web is provided with artwork décor 17 of water-based printing ink which is applied in the desired pattern on the outside of the outer HDPE coating 13 by means of conventional printing technique.

In order to make possible good adhesion between the outer HDPE coating 13 of the web and the water-based printing ink, the outer HDPE coating must be subjected to a surface treatment to change polarity, preferably a corona treatment, prior to the application of the water-based printing ink.

In a practical comparative experiment, a packaging material according to the invention for aseptic packages has proved to consume up to 70 per cent less hydrogen peroxide than a known packaging material of the same structural make up, but with an outer, décor-carrying coating of corona treated LDPE instead of HDPE when the packaging material is led through a bath of hydrogen peroxide for the purposes of sterilization.

It will thus be apparent from the foregoing description that a packaging material according to the invention, despite a per se simple exchange of materials, has surprisingly good advantages over similar prior art packaging materials, in particular when the packaging material is composed and employed for the production of aseptic packages by hydrogen peroxide sterilization.

## Claims

1. A packaging material of laminate type for aseptic packages which are produced from a web of the packaging laminate which, for purposes of sterilization, is led through a bath of hydrogen peroxide prior to the reforming of the web into finished aseptic packages, the packaging material (10) comprising a core layer (11) of rigid, but foldable paper, and outer, liquid-tight coatings (12, 13) of plastic, of which at least one (13) has décor (17) of water-based printing ink applied on its outside, and a gas barrier layer (14) applied between the core layer (11) and the other of the two outer plastic coatings (12), **characterized in that** the décor-carrying one outer plastic coating (13) consists of high density polyethylene (HDPE).

2. The packaging material as claimed in Claim 1, **characterized in that** said gas barrier layer (14) is an aluminium foil.

3. An aseptic packaging container, **characterized in that** it is produced from a packaging material (10) as claimed in Claim 1 or 2.

## Patentansprüche

1. Verpackungsmaterial vom Typ Laminat für aseptische Packungen, die aus einer Bahn aus dem Verpackungslaminat hergestellt werden, die für Sterilisierungszwecke vor dem Umformen der Bahn zu fertigen aseptischen Packungen durch ein Bad aus Wasserstoffperoxid geführt wird, wobei das Verpackungsmaterial (10) eine Kernschicht (11) aus steifem, aber faltbarem Papier und äußere, flüssigkeitsdichte Beschichtungen (12, 13) aus Kunststoff aufweist, wobei auf die Außenseite von wenigstens einer (13) ein Dekor (17) aus wasserhaltiger Drucktinte aufgebracht ist und eine Gassperrschicht (14) zwischen die Kernschicht (11) und die andere der beiden äußeren Kunststoffbeschichtungen (12) aufgebracht ist, **dadurch gekennzeichnet, daß** die eine äußere, Dekor tragende Kunststoffbeschichtung (13) aus Polyethylen hoher Dichte (HDPE) besteht.

2. Verpackungsmaterial nach Anspruch 1, **dadurch gekennzeichnet, daß** die Gassperrschicht (14) eine Aluminiumfolie ist.

3. Aseptischer Verpackungsbehälter, **dadurch gekennzeichnet, daß** er aus einem Verpackungsmaterial (10) nach Anspruch 1 oder 2 hergestellt ist.

## Revendications

1. Matériau d'emballage du type stratifié pour des emballages aseptiques qui sont produits à partir d'un tissu de stratifié d'emballage qui, à des fins de stérilisation, est conduit à travers un bain de peroxyde d'hydrogène avant la reformation du tissu en des emballages aseptiques finis, le matériau d'emballage (10) comprenant une couche de coeur (11) constituée de papier rigide, mais pliable et des revêtements externes étanches aux liquides (12,13) constitués de matière plastique, dont au moins l'un (13) comporte un décor (17) d'encre d'impression à base d'eau appliquée sur son extérieur, et une couche de barrière au gaz (14) appliquée entre la couche de coeur (11) et l'autre des deux revêtements externes en matière plastique (12), **caractérisé en ce que** le revêtement externe en matière plastique (13) portant le décor consiste en du polyéthylène haute densité (HDPE).

2. Matériau d'emballage selon la revendication 1, **caractérisé en ce que** ladite couche de barrière au gaz (14) est une feuille d'aluminium.

3. Conteneur d'emballage aseptique, **caractérisé en ce qu'**il est produit à partir d'un matériau d'emballage (10) selon la revendication 1 ou 2.
